Europäisches Patentamt

European Patent Office

Office européen des brevets

(11) Veröffentlichungsnummer: **0 290 651 B1**

(12) **EUROPÄISCHE PATENTSCHRIFT**

(45) Veröffentlichungstag der Patentschrift: **04.12.91**

(51) Int. Cl.⁵: **G01L 1/22**, G01L 5/12

(21) Anmeldenummer: **87106934.0**

(22) Anmeldetag: **13.05.87**

(54) **Ringkraftaufnehmer.**

(43) Veröffentlichungstag der Anmeldung:
**17.11.88 Patentblatt 88/46**

(45) Bekanntmachung des Hinweises auf die
Patenterteilung:
**04.12.91 Patentblatt 91/49**

(84) Benannte Vertragsstaaten:
**DE FR GB IT NL SE**

(56) Entgegenhaltungen:
**DE-A- 2 357 484**
**DE-C- 1 022 035**
**DE-C- 1 167 502**

(73) Patentinhaber: **CARL SCHENCK AG**
**Landwehrstrasse 55 Postfach 40 18**
**W-6100 Darmstadt(DE)**

(72) Erfinder: **Buchta, Bernhard**
**Stauffenbergstrasse 71**
**W-6100 Darmstadt(DE)**

(74) Vertreter: **Brandt, Ernst-Ulrich**
**Fa. Carl Schenck AG Patentabteilung Land-**
**wehrstrasse 55 Postfach 40 18**
**W-6100 Darmstadt 1(DE)**

## Beschreibung

Die Erfindung betrifft einen Ringkraftaufnehmer gemäß dem Oberbegriff des Patentanspruchs 1.

Bei Ringkraftaufnehmern, Ringkraftmeßdosen oder ähnlichen ring- oder zylinderförmigen Kraftaufnehmern zur Messung von Axialkräften wird die Kraft über Axialkugellager in das Meßelement eingeleitet, insbesondere wenn Drehbewegungen, wie z. B. bei Kranhakenflaschen, an der Krafteinleitung auftreten. Solche Aufnehmer sind z. B. aus der DE-PS 1 167 502 und 1 022 035 bekannt.

Bei den bekannten Aufnehmern entsteht durch die Lagerkugeln eine ungleichmäßige Kraftverteilung am Meßelement bzw. am Kraftaufnehmer. Dieser Nachteil kann dadurch ganz oder teilweise behoben werden, daß zusätzliche Lagerringe zwischen den Lagerkugeln und dem Kraftaufnehmer vorgesehen werden, deren Bauhöhe so bemessen sein muß, daß sie den Kraftfluß vergleichmäßigen, oder daß der axiale Abstand der Lagerkugeln zu den an den Kraftaufnehmern angeordneten Dehnungsmeßstreifen genügend groß gewählt wird. In beiden Fällen ergibt sich jedoch eine verhältnismäßig große Bauhöhe des Kraftaufnehmers.

Der vorliegenden Erfindung liegt die Aufgabe zugrunde, einen Ringkraftaufnehmer der eingangs genannten Art so zu verbessern, daß die Bauhöhe mit einfachen Mitteln verringert werden kann.

Zu diesem Zweck stellt die Erfindung eine Beziehung zwischen den Abständen der Lagerkugeln und den Abständen der am Kraftaufnehmer angeordneten Dehnungsmeßstreifen nach den in den Patentansprüchen angegebenen Merkmalen her. Die Dehnungsmeßstreifen werden dabei so in Abständen auf dem Umfang des Aufnehmerelements angeordnet, daß die Abstände um einen Differenzabstand d ungleich sind dem Kugelabstand a oder einem ganzzahligen Vielfachen des Kugelabstandes, wobei der Differenzabstand d abgeleitet wird aus dem Kugelabstand a und der Anzahl der Dehnungsmeßstreifen. Die Patentansprüche erfassen auch Ausgestaltungen der Erfindung.

Durch die Erfindung wird die Herstellung eines gattungsgemäßen Ringkraftaufnehmers mit besonders niedriger Bauhöhe möglich. Hierbei wird das Meßsignal für eine gegebene Kraft unabhängig von der Lage der Kugeln zu den Dehnungsmeßstreifen am Umfang des Kraftaufnehmers praktisch konstant gehalten. Wenn sich das Kugellager bzw. die Lagerkugeln bewegen, tritt bei der erfindungsgemäßen Anordnung schon nach einer verhältnismäßig kleinen Lageänderung der Kugeln ein Zustand ein, bei dem die Relativlage von Kugeln und Dehnungsmeßstreifen zueinander wieder gleich oder ähnlich dem Ausgangszustand ist. Es hat sich lediglich die Zuordnung der Einzelkugeln zu den Dehnungsmeßstreifen in Umfangsrichtung verschoben. Durch die vorgeschlagene Anordnung der Dehnungsmeßstreifen wird es möglich, die Summe der Meßsignale unabhängig von der Lage der Kugeln für eine gegebene Kraft praktisch konstant zu halten.

Der Differenzabstand d kann nach den in Anspruch 2 angegebenen Formeln gebildet werden.

Die Erfindung wird an einem Ausführungsbeispiel in den Zeichnungen dargestellt und in der Beschreibung näher erläutert.

Es zeigen:

Fig. 1 Anordnung von Längsdehnungsaufnehmern und Querdehnungsaufnehmern über dem Umfang eines Ringkraftaufnehmers (schematisch)

Fig. 2 Ringkraftaufnehmer im Schnitt

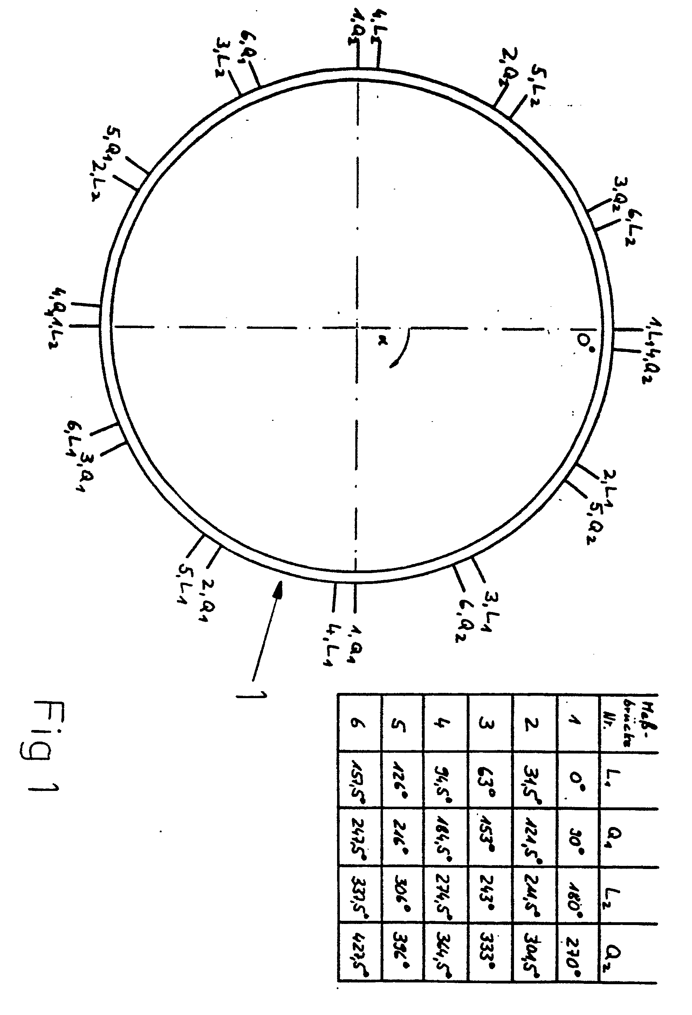

In Fig. 1 ist schematisch die Anordnung von Dehnungsmeßstreifen in Form von zwölf Längsdehnungs- bzw. Längskraftaufnehmern L1(1-6), L2(1-6) und zwölf Querdehnungsbzw. Querkraftaufnehmern Q1(1-6), Q2(1-6) am Umfang des Ringkraftaufnehmers dargestellt. Die Aufnehmer sind zu einer Vollbrückenschaltung mit sechs Vollbrücken zusammengeschaltet, wobei jede Vollbrücke, wie dargestellt, aus jeweils zwei einander gegenüberliegenden Längs- und Querdehnungsaufnehmern besteht.

Das Axialkugellager, über das der Ringkraftaufnehmer beaufschlagt wird, soll im dargestellten Ausführungsbeispiel 24 Kugeln aufweisen. Die Kugeln haben damit einen Winkelabstand von $15°$. Es sind jeweils sechs Längsdehnungsaufnehmer auf einem Umfang von $180°$ angeordnet. Der Differenzwinkelabstand d errechnet sich nach der Formel a) aus dem Kugelabstand, geteilt durch die Zahl $2n$ der Dehnungsmeßstreifen (Längsdehnungsaufnehmer) für den gewählten halben Umfang, im dargestellten Beispiel $180°$, minus 2 zu: $d = 15 : (2.6 - 2) = 1,5°$. Dieses ergibt bei sechs Dehnungsmeßstreifen ein Abstand der einzelnen Meßstreifen von: $(180 : 6) + 1,5° = 31,5°$.

Wenn nach der Formel b) nicht der halbe, sondern der ganze Umfang für die Berechnung zugrunde gelegt wird, ergibt sich ein Meßstreifenabstand von $33°$.

Bei einer solchen Anordnung ergibt sich bei einer Lageänderung der Kugeln von nur 1,5 bzw. 3,0 Winkelgrad eine praktisch dem Ausgangszustand gleiche Zuordnung von Kugeln und Dehnungsmeßstreifen.

In Fig. 1 sind in der Tabelle die zu den Meßbrücken 1 bis 6 gehörenden Längsdehnungsaufnehmer L1, L2 und Querdehnungsaufnehmer Q1, Q2 mit ihren jeweiligen Umfangs- bzw. Winkelpositionen $\alpha$ von Null Grad ausgehend angegeben. Bei einer Vollbrückenschaltung sind die zu einer Brücke gehörenden Querdehnungsaufnehmer jeweils im Winkel von $90°$ zu den Längsdehnungsaufnehmern angeordnet. Bei der erfindungsgemäßen Anordnung können auch mehr oder weniger als sechs Meßbrücken auf dem Umfang des Ringkraftaufnehmers vorgesehen werden.

Anstelle der beschriebenen Vollbrückenschaltung kann auch eine Halbbrückenschaltung vorgesehen werden. In diesem Fall können die Querdehnungsaufnehmer QI und Q2 entfallen bzw. durch konstante Widerstände ersetzt werden.

Die vorgeschlagene Anordnung der Dehnungsmeßstreifen ist auch möglich bei einer einfachen Widerstandsmessung, bei der n Längskraftaufnehmer über den Umfang des Ringkraftaufnehmers von 360° verteilt angeordnet sind. Auch in einem solchen Fall kann der Einfluß von Lageänderungen der Kugeln auf das Meßergebnis ausgeschaltet bzw. vermindert werden.

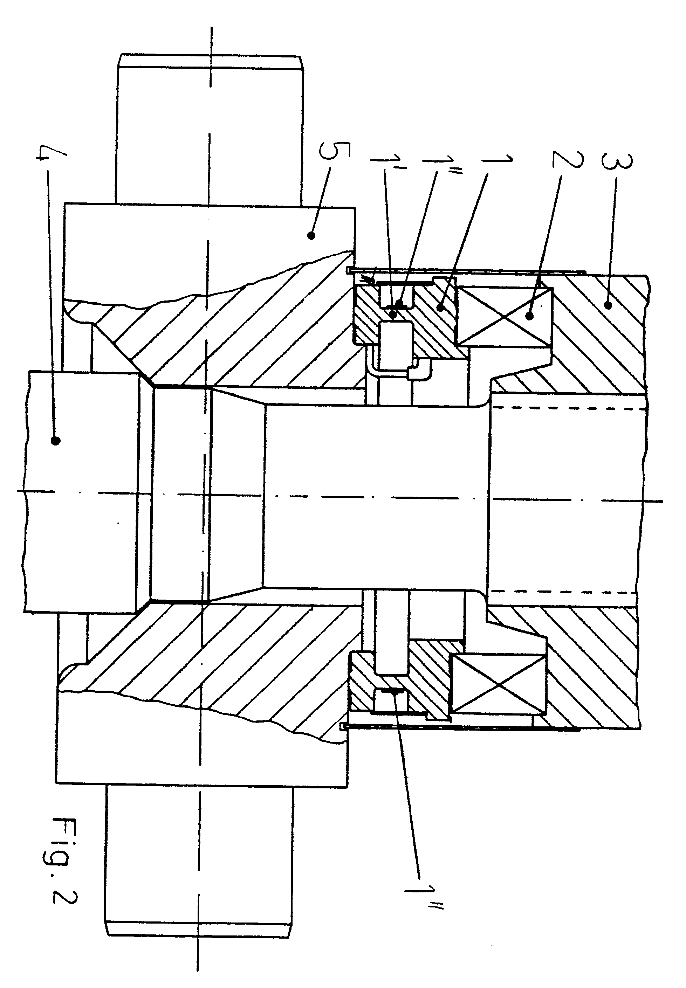

Fig. 2 zeigt einen Schnitt durch einen Ringkraftaufnehmer im eingebauten Zustand. Das Aufnehmerelement I weist einen doppel-T-förmigen Querschnitt auf. Die Dehnungsmeßstreifen sind, wie bei I" schematisch angedeutet, am Außenumfang des Stegs I' angeordnet. Die zu messende Kraft wird über ein Axialkugellager 2 in das Aufnehmerelement I eingeleitet. Das Axialkugellager wird über ein ringförmiges Lastaufnahmeteil oder Abstützelement 3, z. B. eine Kranhakenmutter, und einen Zapfen 4, der z. B. Teil eines Kranhakens ist, mit der Meßkraft beaufschlagt. Das Aufnehmerelement I ist über ein Joch 5 abgestützt. Die dem Kugellager 2 bzw. dem Joch 5 zugewandten Flansche des Aufnehmerelements I können wie dargestellt, z. B. schmale Auflageflächen aufweisen.

Die dargestellte Anordnung kann z. B. bei einer Kranhakenflasche Verwendung finden.

## Patentansprüche

1. Ringkraftaufnehmer, der über ein Axialkugellager beaufschlagt wird, bei dem die Kraft über die im Axialkugellager befindlichen Kugeln axial in ein ring- oder zylinderförmiges Aufnehmerelement übertragen wird, an dessen Umfang Dehnungsmeßstreifen angeordnet sind, dadurch gekennzeichnet, daß die Dehnungsmeßstreifen in Abständen auf dem Aufnehmerelement (1) angeordnet sind, die um einen Differenzabstand d ungleich sind dem Kugelabstand a oder einem ganzzahligen Vielfachen des Kugelabstandes, wobei der Differenzabstand d abgeleitet wird aus dem Kugelabstand a und der Anzahl n der Dehnungsmeßstreifen.

2. Ringkraftaufnehmer nach Anspruch I, **dadurch gekennzeichnet,** daß der Differenzabstand d zum Kugelabstand a bestimmt wird aus der Zahl n der für einen Umfang von I80° oder 360° vorgesehenen aktiven Dehnungsmeßstreifen nach der Formel:

a) d = a: (2n - 2) oder b) d = a: (n - I)

3. Ringkraftaufnehmer nach Anspruch I oder 2, **dadurch gekennzeichnet,** daß das Aufnehmerelement (I) ein Verhältnis von Höhe zu Durchmesser aufweist, daß kleiner ist als 0,5.

4. Ringkraftaufnehmer nach Anspruch I bis 3, **dadurch gekennzeichnet,** daß das Aufnehmerelement (I) einen doppel-T-förmigen Querschnitt aufweist und daß die Dehnungsmeßstreifen auf dem Steg (I') des Aufnehmerelements (I) angeordnet sind.

5. Ringkraftaufnehmer nach Anspruch I bis 4, **dadurch gekennzeichnet,** daß die Dehnungsmeßstreifen als Längsdehnungsaufnehmer (LI, L2) ausgebildet sind.

6. Ringkraftaufnehmer nach Anspruch 5, **dadurch gekennzeichnet,** daß auf dem Aufnehmerelement (I) zusätzliche Querdehnungsaufnehmer (QI, Q2) angeordnet sind, deren Abstand in gleicher Weise bestimmt wird wie der Abstand der Längsdehnungsaufnehmer (LI, L2) und die im Winkel von 90° zu den zugeordneten Längsdehnungsaufnehmern (LI, L2) angeordnet sind.

7. Ringkraftaufnehmer nach Anspruch I, **dadurch gekennzeichnet,** daß die Dehnungsmeßstreifen in Vollbrücken-oder Halbbrückenschaltung zusammengeschaltet oder als einfache Widerstandsaufnehmer ausgebildet sind.

## Claims

1. An annular force sensor which is acted upon by an axial ball bearing, in which the force is transmitted axially into an annular or cylindrical sensor element by means of the balls located in the axial ball bearing, strain gauges being arranged at its periphery, **characterised in that** the strain gauges are arranged at spacings on the sensor element (1), which spacings differ by a spacing difference d from the ball spacing a or a whole numbered multiple of the ball spacing, in which the spacing difference d is derived from the ball spacing a and the number n of the strain gauges.

2. An annular force sensor according to claim 1, **characterised in that** the spacing difference d from the ball spacing a is determined from the number n of the active strain gauges provided for a periphery of 180 degrees or 360 degrees according to the formula:

a) d = a: (2n - 2) or b) d = a: (n -1)

3. An annular force sensor according to claim 1 or 2, **characterised in that** the sensor element (1) has a ratio of height to diameter that is smaller than 0.5.

4. An annular force sensor according to claim 1 to 3, **characterised in that** the sensor element (1) has a double T shaped cross section and that the strain gauges are arranged on the web (1') of the sensor element (1).

5. An annular force sensor according to claim 1 to 4, **characterised in that** the strain gauges are formed as longitudinal strain sensors (L1, L2).

6. An annular force sensor according to claim 5, **characterised in that** additional transverse strain sensors (Q1, Q2) are arranged on the sensor element (1), the spacing of which (transverse strain sensors) is determined in the same manner as the spacing of the longitudinal strain sensors (L1, L2) and which are arranged at an angle of 90 degrees from the associated longitudinal strain sensors. (L1, L2).

7. An annular force sensor according to claim 1, **characterised in that** the strain gauges are connected together in full bridge or half bridge connection or are formed as simple resistance sensors.

## Revendications

1. Transducteur de force annulaire, sollicité à travers un roulement à billes axial, dans lequel la force est transmise par les billes se trouvant dans le roulement à billes axial, dans un élément de capteur annulaire ou cylindrique, à la périphérie duquel sont disposés des jauges extensométriques, caractérisé en ce que les jauges extensométriques sont disposées à intervalle sur l'élément de capteur (1), intervalles différents d'une valeur d'écart d, de l'espacement a des billes, ou d'un multiple entier de l'espacement des billes, la différence d'espacement d étant déduite de l'espacement a des billes et du nombre n des jauges extensométriques.

2. Transducteur de force annulaire selon la revendication 1, caractérisé en ce que la différence d'espacement d par rapport à l'espacement des billes a est déterminé à partir du nombre n des jauges extensométriques actives prévues sur une périphérie d'angle de 180° ou 360°, suivant la formule ;

a) d = a : (2 n - 2), ou b) d = a : (n - 1)

3. Transducteur de force annulaire selon la revendication 1 ou 2, caractérisé en ce que l'élément de capteur (1) présente un rapport entre hauteur et diamètre qui est inférieur à 0,5.

4. Transducteur de force annulaire selon les revendications 1 à 3, caractérisé en ce que l'élément de capteur (1) présente une section transversale en forme de double T et que les jauges extensométriques sont disposées sur l'âme (1') de l'élément de capteur (1).

5. Transducteur de force annulaire selon les revendications 1 à 4, caractérisé en ce que les jauges extensométriques sont réalisées sous forme de capteurs extensométriques opérant longitudinalement (L1, L2)

6. Transducteur de force annulaire selon la revendication 5, caractérisé en ce que sur l'élément de capteur (1) sont en plus disposées des capteurs extensométriques opérant transversalement (Q1, Q2), dont l'espacement est déterminé de manière identique à celui des capteurs extensométriques opérant longitudinalement (L1,L2), et qui sont disposés suivant des angles de 90° par rapport aux capteurs extensométriques opérant longitudinalement (L1,L2) associés.

7. Transducteur de force annulaire selon la revendication 1, caractérisé en ce que les jauges extensométriques sont montées en pont complet ou à moitié en pont ou sous forme de simple capteur résistif.

EP 0 290 651 B1

| Meß-brücke Nr. | $L_1$ | $Q_1$ | $L_2$ | $Q_2$ |
|---|---|---|---|---|
| 1 | 0° | 90° | 180° | 270° |
| 2 | 31,5° | 121,5° | 211,5° | 301,5° |
| 3 | 63° | 153° | 243° | 333° |
| 4 | 94,5° | 184,5° | 274,5° | 364,5° |
| 5 | 126° | 216° | 306° | 396° |
| 6 | 157,5° | 247,5° | 337,5° | 427,5° |

Fig 1

Fig. 2

EP 0 290 651 B1